# EUROPÄISCHE PATENTSCHRIFT

(11) **EP 1 097 183 B1**
(45) Veröffentlichungstag und Bekanntmachung des Hinweises auf die Patenterteilung: **10.04.2002**
(21) Anmeldenummer: 99936499.5
(22) Anmeldetag: 08.07.1999
(51) Int. Cl.: C08K 3/24, C08K 5/54, C08L 83/04

(54) **KONDENSATIONSVERNETZENDES SILIKON MIT HOHER FESTIGKEIT**
HIGH-RESISTANT CONDENSATION CROSS-LINKING SILICON
SILICONE A RETICULATION PAR CONDENSATION, PRESENTANT UNE RESISTANCE ELEVEE

(30) Priorität: 21.07.1998 DE 19832686
(43) Veröffentlichungstag der Anmeldung: 09.05.2001
(73) Patentinhaber: Heidelberger Bauchemie GmbH, 69120 Heidelberg (DE)
(72) Erfinder: LUFT, Werner, D-83512 Reitmehring (DE); FUTSCHER, Michael, D-83339 Chieming (DE)
(74) Vertreter: Grussdorf, Jürgen, Dr.
(86) Internationale Anmeldenummer: EP9904799
(87) Internationale Veröffentlichungsnummer: WO0005298

(56) Entgegenhaltungen:
- EP-A- 0 021 859
- US-A- 4 489 199

## Beschreibung

Die vorliegende Erfindung betrifft einen Bausatz zur Herstellung von kondensationsvernetzenden Silikon-Mischungen aus zumindest bifunktionell terminierten Diorganopolysiloxanen, Acetoxysilan-Vernetzungsmitteln, sowie ggf. Füllstoffen, geeigneten Additiven, Pigmenten, Farbstoffen, Oxidations-, Hitze- und Lichtschutzpigmenten sowie Lösungsmittel und Weichmacher.

Solche auch als kaltvulkanisierende, einkomponentige Silikonkautschuke bekannten Organopolysiloxan-Mischungen vernetzen üblicherweise bei Raumtemperatur unter Aufnahme von Wasser aus der umgebenden Atmosphäre zu kautschukelastischen Polymeren. Als Kettenverlängerer und Vernetzer werden zwei- und bevorzugt höherfunktionelle Acetoxysilanverbindungen eingesetzt, welche durch Reaktion mit dem Polysiloxan bzw. durch Hydrolyse Essigsäure abspalten und so die Ausbildung eines makromolekularen Netzwerkes einleiten. Nach erfolgter Aushärtung zeichnen sich solche Massen durch eine gute Eigenhaftung auf den unterschiedlichsten Werkstoffoberflächen und durch eine allgemein hohe Beständigkeit gegenüber Temperatur-, Licht-, Feuchtigkeits- sowie Chemikalieneinwirkung aus.

Die Aushärtung solcher einkomponentigen, bei Raumtemperatur unter Feuchtigkeitsaufnahme vernetzenden Polysiloxan-Mischungen verläuft verhältnismäßig langsam, da das für die Reaktion erforderliche Wasser aus der umgebenden Atmosphäre in das Innere der Masse diffundieren muß. Die Geschwindigkeit der Durchhärtung nimmt daher mit fortschreitender Reaktion im Inneren der Masse ab. Bei geringer Luftfeuchtigkeit oder bei einem ungünstigen Verhältnis von Oberfläche zu Volumen der Silikonmasse kann die Reaktion sehr langsam werden oder wie in dampfdicht abgeschlossenen Räumen auch vollständig zum Erliegen kommen.

Die an sich vielfältigen Einsatzmöglichkeiten solcher luftfeuchtigkeitshärtenden Silikone als Dicht- oder Klebstoff sind insbesondere bei Verwendung in der industriellen Fertigung wegen der langsamen Aushärtung eingeschränkt. Zwar sind zweikomponentige, bei Raumtemperatur oder auch erst bei höherer Temperatur schnell härtende Silikonkautschuksysteme bekannt, doch scheitert deren Einsatz häufig an der mangelnden Eigenhaftung oder auch der vergleichsweise geringen Temperaturbeständigkeit dieser Produkte. Setzt man aber die unter dem Einfluß von Luftfeuchtigkeit nur langsam aushärtenden Silikone ein, werden bei den aus wirtschaftlichen Gründen erwünschten kurzen Taktzeiten große Zwischenlager für abgedichtete oder verklebte Teile notwendig, um die Aushärtung sicherzustellen. Gegebenenfalls müssen diese Zwischenlager zusätzlich klimatisiert oder befeuchtet werden. Unter Umständen werden auf diese Weise bereits sehr große Stückzahlen gefertigt, bevor erstmals eine Prüfung auf Fehlerfreiheit und Funktion der erzeugten Güter möglich ist. Großflächige Verklebungen zwischen diffusionsdichten Flächen sind in der Praxis mit luftfeuchtigkeitshärtenden Silikonen ebensowenig durchführbar wie die Herstellung von Formkörpern in abgeschlossenen Formen.

Setzt man den bekannten acetoxysilanhaltigen und luftfeuchtigkeitshärtenden Massen Wasser in flüssiger Form zu, wird im Vergleich zur Vernetzung mit Luftfeuchtigkeit eine gewisse Beschleunigung der Aushärtung erzielt. Allerdings führt diese Form der Vernetzung nicht zu Endprodukten mit Materialeigenschaften, wie sie bei reiner Luftfeuchtigkeitsvernetzung erhalten werden. Vielmehr resultieren Massen, welche auf Dauer wesentlich weicher bleiben, schlechte Eigenhaftung aufweisen und noch sehr lange Zeit mit der als Vernetzungsspaltprodukt entstehenden Essigsäure angequollen sind.

Ähnliche Ergebnisse, also nur geringfügige Härtungsbeschleunigung verbunden mit vergleichsweise schlechteren Materialeigenschaften und mit lange anhaltendem Essiggeruch, werden erhalten, wenn Wasser in Form kristallwasserhaltiger neutraler Salze oder auch bewußt oberflächenbefeuchteter Stoffe zugesetzt wird.

Aus der US 4 532 315 ist bekannt, daß acetathärtende Silikonmassen durch Zusatz von Hydroxiden der Alkali- und Erdalkalimetalle und ggf. Zusatz von Wasser beschleunigt aushärten. Zum Einsatz kommen dabei die kristallwasserhaltigen Formen der Hydroxide bzw. Wasser wird der Mischung zusätzlich beigefügt. Die basischen Verbindungen reagieren mit dem Spaltprodukt, der Essigsäure unter Salzbildung, wobei damit das Reaktionsgleichgewicht auf die Seite der Produkte getrieben wird. Das dem System zugesetzte Alkali und Wasser löst die Hydrolysereaktion der Acetoxygruppen des Vernetzers aus und beschleunigt auf diese Weise die Bildung der Polymerstruktur.

Ein wesentlicher Nachteil der bekannten kondensationsvernetzenden Silikone ist ihre limitierte Festigkeit. Während additionsvernetzende Systeme Reißfestigkeiten bis zu 7 N/mm² erreichen, liegen die Reißfestigkeiten der kondensationsvernetzenden Systeme bei max. 2 N/mm², meist jedoch deutlich darunter. Daraus resultiert eine stark eingeschränkte Einsatzmöglichkeit der kondensationsvernetzten Silikone auf Anwendungen, bei denen eine hohe Dehnfähigkeit des Kleb-/Dichtstoffes erforderlich ist. Bei Verklebungen die hohen, schockartigen Belastungen oder Vibrationen ausgesetzt sind, kommen bisher keine kondensationsvernetzenden Systeme zum Einsatz.

Die der Erfindung zugrundeliegende Aufgabe bestand somit darin, einen Bausatz zur Herstellung von Dicht- und Klebstoffmassen auf Basis von kondensationsvernetzenden Acetoxysilan-Polysiloxanmischungen zur Verfügung zu stellen, wobei eine beschleunigte Aushärtung nach Mischung des Bausatzes erzielt und darüberhinaus eine hohe Festigkeit des Polymermaterials erreicht wird. Die aus den erfindungsgemäßen Bausätzen hergestellten Silikonmassen sollen innerhalb kurzer Zeit, d.h. innerhalb weniger Minuten bis hin zu wenigen Stunden und unabhängig von der umgebenden Luftfeuchtigkeit aushärten, wobei neben den typischen Merkmalen der bisher bekannten Vulkanisate, wie zum Beispiel Eigenhaftung, Beständigkeiten und mechanischen Eigenschaften dabei insbesondere die Zugfestigkeit und die Temperaturbeständigkeit des beschleunigt ausgehärteten Silikons verbessert werden soll.

Es wurde nun gefunden, daß diese Aufgabe gelöst wird, wenn man die als Beschleuniger wirkenden Hydroxide der Alkali- und Erdalkalimetalle gemäß US 4 532 315 durch kristallwasserhaltige saure Neutralssalze des Aluminiums und des Eisens mit Mineralsäuren ersetzt, vorzugsweise durch die Alaune, aber auch beispielsweise Aluminiumsulfat oder Eisenphosphat. Dabei kann beim Einsatz insbesondere der Aluminiumalaune des Ammoniums und der Alkalimetalle neben der beschleunigenden Wirkung, im Vergleich zur Luftaushärtung, auf die Aushärtung eine gleichzeitig außergewöhnlich verbesserte Zugfestigkeit bzw. Reißfestigkeit der unter diesen Bedingungen polymerisierten Silikone erreicht werden. Unter den sauren Neutralsalzen, zu denen auch die Alaune zählen, werden Verbindungen verstanden, bei denen rechnerisch alle ionsierbaren Wasserstoff-Atome der Säure durch andere Kationen ersetzt sind und lediglich über die unterschiedlichen Dissoziationsgrade der zugrundeliegenden Säuren die wässrigen Lösungen der Salze sauer reagieren, insbesondere bei 1 molaren Lösungen pH-Werte von unter 5, bevorzugt unter 4 erhalten werden. Es ist überraschend, daß solche Verbindungen vorteilhaft anstelle der Alkalien eingesetzt werden können und dabei eine erhöhte Festigkeit der Silikone erzeugen. Ein gewisser Unterschied besteht darin, daß die auf diese Weise beschleunigten Silikone eine längere Reaktionszeit im Vergleich zu beispielsweise basischen Salzen benötigen.

Die der Erfindung zugrundeliegende Aufgabe wird durch die Merkmale des Hauptanspruches gelöst und durch die der Unteransprüche gefördert. Solche Bausätze zur Herstellung der Mischungen sind dadurch gekennzeichnet, daß sie mindestens folgende Komponenten enthalten:
A) 100 Gew.-Teile eines zumindest bifunktionell terminierten Diorganopolysiloxans, wobei dieses aus einer linearen oder verzweigten Kette aus sich wiederholenden Einheiten der Formel 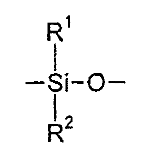 aufgebaut und - wie nachfolgend am Fall einer linearen Kette dargestellt - mit funktionellen Endgruppen Z terminiert ist. 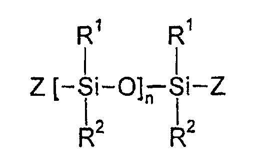 Hierbei bedeuten:
   - R¹, R²:: gesättigte oder ungesättigte Kohlenwasserstoffreste mit 1 - 15 Kohlenstoffatomen, ggf. substituiert mit Halogen- oder Cyanogruppen
   - Z:: -H, -OH, -OR¹ und ―SiR³(OCOR⁴)₂
   - R³:: Wasserstoff oder einwertiger gesättigter oder ungesättigter Kohlenwasserstoff- oder Kohlenwasserstoffoxyrest mit 1 - 15 Kohlenstoffatomen.
   - R⁴:: Wasserstoff und/oder gesättigter oder ungesättigter aliphatischer, cycloaliphatischer oder aromatischer Kohlenwasserstoffrest mit 1- 15 Kohlenstoffatomen, ggf. substituiert mit Halogen- oder Cyanogruppen.
B) 0,1 bis 20 Gew.-Teile eines Acetoxysilanvernetzers der allgemeinen Formel

   R³ _{y}-Si-(OCOR⁴)_{4-y}

   wobei y= 0 oder 1 ist, und R³, R⁴ die obige Bedeutung haben.
C) 0,1 bis 20 Gew.-Teile eines Beschleunigers in Form eines sauren Neutralsalzes des Aluminiums oder Eisens, vorzugsweise eines Alauns, insbesondere der Aluminiumalaune des Ammoniums und der Alkalimetalle,
D) 0 bis 20 Gew.-Teile Wasser.

Als Beispiel für die Reste R¹ und R² der Komponente A sind beliebige gesättigte Alkylreste wie Methyl, Ethyl, n-Propyl, Isopropyl, Octyl, Dodecyl, Octadecyl, aber auch cyclische wie Cyclopentyl und Cyclohexyl zu nennen. Die Reste R¹ und R² können innerhalb eines Polysiloxans von gleichem oder auch verschiedenem Aufbau sein. Auch ist es möglich, verzweigte und unverzweigte Polysiloxane mit dem vorstehend beschriebenen Aufbau und in unterschiedlicher Kettenlänge zu mischen. Vorzugsweise werden mit Hydroxylgruppen terminierte Polysiloxane, sogenannte α, ω-Dihydroxydiorganopolysiloxane mit Methyl- und Phenylresten eingesetzt.

Die genannten Reste können auch in halogen- und cyansubstituierter Form eingesetzt sein. Beispiele hierfür sind 1,1,1-Trifluortoluyl, β-Cyanethyl oder o-, m-oder p-Chlorphenylreste.

Die Viskosität der Diorganopolysiloxane liegt vorzugsweise im Bereich von 500 bis 350000 mPas.

Der Rest R³ kann neben Wasserstoff vom selben Aufbau sein, wie die Reste R¹ und R². Bevorzugt verwendet werden einfache Alkylreste wie Methyl oder Ethyl.

Der Rest R⁴ kann den gleichen Aufbau haben wie die Reste R¹, R² oder R³, wobei der Rest auch Wasserstoff sein kann.

Als Komponente C eignen sich saure Neutralsalze des Aluminiums bzw. des Eisens mit Mineralsäuren, vorzugsweise die Alaune, wie beispielsweise Eisen- und Aluminiumalaune mit sauren Eigenschaften, insbesondere die Aluminiumalaune des Ammoniums und der Alkalimetalle, aber auch Aluminiumsulfat oder Eisenphosphat.

Komponente D kann der Mischung sowohl in flüssiger Form als auch gebunden als Kristallwasser zum Beispiel als Natriumsulfat-Dekahydrat oder eingeschlossen in Zeolithe und auch adsorbiert auf der Oberfläche von Füllstoffen wie beispielsweise Calciumcarbonat zugegeben werden. Vorzugsweise wird das erforderliche Wasser jedoch ausschließlich mit der Komponente C gebunden als Kristallwasser zugegegeben.

Den Mischungen der Komponenten A bis D können weitere Stoffe zur Erzielung spezieller Eigenschaften zugegeben werden. Zu nennen sind hier insbesondere Farbpigmente und lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch auf Kohlenwasserstoffbasis), verstärkende Füllstoffe wie beispielsweise hochdisperse oder gefällte Kieselsäuren, Graphit, Ruß sowie passive Füllstoffe wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen. Als Kieselsäuren werden bevorzugt pyrogene Kieselsäuren verwendet, deren polare Oberfläche hydrophobisiert ist.

Mischungen aus den Komponenten A bis D sind nicht lagerstabil. Die zur Reaktionsbeschleunigung notwendigen Komponenten C und D werden deshalb der Mischung aus den Komponenten A und B unmittelbar vor Gebrauch in einer geeigneten Form, vorzugsweise angepastet in Silikon-Ölen oder -Polymeren zugemischt.

Die vorliegende Erfindung betrifft auch Verfahren zur Herstellung einer Dicht-, oder Klebstoffmischung bzw. Formmasse auf Basis von zumindest bifunktionell terminierten Diorganopolysiloxanen und Acetoxyvernetzern, die dadurch gekennzeichnet sind, daß
A) 100 Gew.-Teile eines solchen Diorganopolysiloxans, wobei dieses aus einer linearen oder verzweigten Kette aus sich wiederholenden Einheiten der Formel 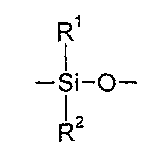 aufgebaut und entsprechend der nachfolgenden auf den Sonderfall linearer Ketten zutreffenden Formel 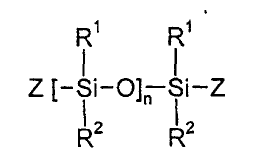 mit funktionellen Endgruppen Z terminiert ist,
   und wobei
   - R¹, R²:: gesättigte oder ungesättigte Kohlenwasserstoffreste mit 1 - 15 Kohlenstoffatomen, ggf. substituiert mit Halogen- oder Cyanogruppen
   - Z:: -H, -OH, -OR¹ und -SiR³(OCOR⁴)₂
   - R³:: Wasserstoff oder einwertiger gesättigter oder ungesättigter Kohlenwasserstoff- oder Kohlenwasserstoffoxyrest mit 1 - 15 Kohlenstoffatomen,
   - R4:: Wasserstoff und/oder gesättigter oder ungesättigter aliphatischer, cycloaliphatischer oder aromatischer Kohlenwasserstoffrest mit 1 - 15 Kohlenstoffatomen, ggf. substituiert mit Halogen- oder Cyanogruppen.
B) 0,1 bis 20 Gew.-Teile eines Acetoxysilanvernetzers der allgemeinen Formel

   R³ _{y}-Si-(OCOR⁴)_{4-y}

   wobei y= 0 oder 1 ist, und R³, R⁴ die obige Bedeutung haben,
   sowie ggf. Farbpigmenten oder löslichen Farbstoffen, Stabilisatoren gegen Oxidation und Hitzeeinwirkung, Dispergatoren, Reaktionskatalysatoren, Fungiziden, Haftvermittlern, Lösungsmitteln, Flammschutzmitteln, Weichmachern (vorzugsweise Silikonöle aber auch Weichmacher auf Kohlenwasserstoffbasis), darüberhinaus aktiven, verstärkenden Füllstoffen wie beispielsweise hochdisperse oder gefällte Kieselsäuren, Graphit, Ruß sowie passiven Füllstoffen wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen miteinander vermischt werden und unmittelbar vor der Anwendung
C) 0,1 bis 20 Gew.-Teile eines Beschleunigers in Form eines sauren Neutralsalzes des Aluminiums oder Eisens, vorzugsweise eines Alauns, insbesondere der Aluminiumalaune des Ammoniums und der Alkalimetalle,
D) 0 bis 20 Gew.-Teile Wasser
   ggf. angepastet in Silikon-Ölen oder-Polymeren zugegeben werden.

Die mit Hilfe des erfindungsgemäßen Bausatzes hergestellten Mischungen härten bei Raumtemperatur in 45 Minuten bis 3 Stunden zu einer festen, klebfreien und schneidbaren Masse aus. Erhöhte Temperatur bei der Aushärtung (ca. 40°C) bewirkt eine zusätzliche Beschleunigung. Die Mischungen haften von sich aus auf Untergründen aus Glas, Keramik, Holz, Metallen und Kunststoffen.
Die erfindungsgemäßen Mischungen werden deshalb vorteilhafterweise verwendet zur Verklebung von Metallen, Glas und Kunststoffen, insbesondere in Bauteilen, in denen Vibrationen auftreten, beispielweise bei der Herstellung von Maschinen, Motoren, im Automobil- und Fahrzeugbau sowie in der Hausgeräteindustrie, insbesondere der Küchenmaschinenfertigung.

Nachfolgend wird die Erfindung anhand eines Beispiels näher erläutert (die Prozentangaben beziehen sich auf Masse%).

### Beispiel

Komponente I bestehend aus
61,2% eines α,ω-Dihydroxydimethylpolysiloxans mit einer Viskosität von 6000 mPa·s,
14,4% einer oberflächenbehandelten pyrogenen hochdispersen Kieselsäure mit einer spezifischen Oberfläche nach BET von ca. 140 ± 50 m²/g,
4% Triacetoxymethylsilan
0,4% sonstige Zusätze
werden bei Raumtemperatur mit einer Komponente II, bestehend aus
13,6% eines α,ω-Dihydroxydimethylpolysiloxans mit einer Viskosität von 80.000 mPa·s,
4% einer oberflächenbehandelten pyrogenen hochdispersen Kieselsäure mit einer spezifischen Oberfläche nach BET von ca. 140 ± 50 m²/g,
2,3% eines Ammoniumaluminiumsulfatdodekahydrats mit einer Kornfeinheit von < 100 µm
homogen miteinander vermischt.

Die aus den Komponenten eines erfindungsgemäßen Bausatzes hergestellten Silikonmischungen waren nach ca. 45 min bei Raumtemperatur unter Ausschluß von Luftfeuchtigkeit ausgehärtet und erreichten dabei eine Shore-A-Härte von ca. 45.
Beide Komponenten I und II für sich bleiben unter diesen Bedingungen lagerstabile Pasten.

Darüberhinaus wurde eine schnellaufgebaute Eigenhaftung auf verschiedenen Untergründen, insbesondere Glas, Metallen und Kunststoffen erzielt.

Die derart kondensationspolymerisierten Silikone zeigen eine außergewöhnliche Zug- und Reißfestigkeit, die im Vergleich deutlich über dem Wert von gerade 1,5 N/mm² für einkomponentige unbeschleunigte, luftfeuchtigkeitshärtende Systeme und ebenfalls deutlich über dem Wert eines zweikomponentigem unbeschleunigten, luftfeuchtigkeitshärtenden System (aus Komponente A und B) von 2,2 N/mm² nach einer Woche bei 23°C liegt. Zur Messung der Zugfestigkeit werden verklebte Aluminiumkörper mit einer Klebefläche von 15 x 50 mm und einer Schichtdicke von 0,6 mm gefertigt. Ein nach dem obigen Beispiel hergestelltes Silikon weist dabei die folgenden Zugfestigkeits-Werte auf:

| | Zugfestigkeit | Bruchdehnung |
|---|---|---|
| nach 24 h | 2,9 N/mm² | 300% |
| nach 72 h | 4,1 N/mm² | 260% |
| nach 144 h | 4,3 N/mm² | 240% |

In der folgenden Tabelle sind weitere Versuche mit anderen Alaunen wiedergegeben, wobei die Komponenten I und II sowie die Herstellung gemäß dem vorstehenden Beispiel durchgeführt wurden.

Die auf diese Weise hergestellten Silikonmassen waren zwischen 45 min und 3 h bis in den Kern ausgehärtet und schneidbar. Die über die Beschleunigersubstanz eingebrachte Wassermenge beträgt dabei jeweils ca. 0,3 g/100 g I-Komponente.

| Beschleuniger | Kristall wasser | pH-Wert | Mischungsverhältnis I:II (Gew.-T.) | Ausgehärtet/ Schneidbar | Zugfestigkeit(nach 7 d) |
|---|---|---|---|---|---|
| saure Neutralsalze: | | | | | |
| NH₄Al(SO₄)₂ | 12 | 3-4,5 | 100:25 | 45 min | 4,3 N/mm² |
| NH₄Fe(SO₄)₂ | 12 | 1 | 100:25 | ca. 3 h | |
| KAl(SO₄)₂ | 12 | 3-3,5 | 100:25 | ca. 3 h | |
| Al₂(SO₄)₃ | 18 | 3-4 | 100:25 | >3 h | |
| FeSO₄ | 7 | 3-4 | 100:25 | ca. 3 h | |
| FePO₄ | 4 | | 100:25 | ca. 1 h | |

| ohne Beschleuniger (Vergleich): | | | | | |
|---|---|---|---|---|---|
| Luftfeuchte | | | 100:0 | >7 d | 2,2 N/mm² |
| H₂O (flüssig) | | | | 1-2 d | |
| SiO₂ * x H₂O | | | | >>8 h | |

Die derart hergestellten erfindungsgemäßen Silikonmassen zeigen eine schnellaufgebaute Eigenhaftung auf verschiedenen Untergründen, insbesondere Glas, Metallen und Kunststoffen.

## Patentansprüche

1. Bausatz zur Herstellung von schnellhärtenden, acetoxysilanvernetzenden Silikonmassen aus zumindest bifunktionell terminierten Diorganopolysiloxanen, Acetoxysilanvernetzer sowie ggf. Füllstoffen, geeigneten Additiven und Pigmenten, welcher folgende Komponenten enthält:
A) 100 Gew.-Teile eines zumindest bifunktionell terminierten Diorganopolysiloxans, wobei dieses Polysiloxan aus einer linearen oder verzweigten Kette aus sich wiederholenden Einheiten der Formel 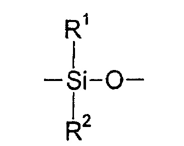 aufgebaut ist und mindestens zwei Endgruppen Z enthält,
mit
Z: -H, -OH, -OR¹ und ―SiR³(OCOR⁴)₂
R¹,R²: gesättigte oder ungesättigte Kohlenwasserstoffreste mit 1 bis 15 Kohlenstoffatomen, ggf. substituiert mit Halogenoder Cyanogruppen
R³: Wasserstoff oder einwertiger gesättigter oder ungesättigter Kohlenwasserstoff- oder Kohlenwasserstoffoxyrest mit 1 - 15 Kohlenstoffatomen.
R⁴: Wasserstoff und/oder gesättigter oder ungesättigter aliphatischer, cycloaliphatischer oder aromatischer Kohlenwasserstoffrest mit 1-15 Kohlenstoffatomen, ggf. substituiert mit Halogen- oder Cyanogruppen.
B) 0,1 bis 20 Gew.-Teile eines Acetoxysilanvernetzers der allgemeinen Formel
R³ _{y}-Si-(OCOR⁴)_{4-y}
wobei y= 0 oder 1 ist, und R³, R⁴ die obige Bedeutung haben,
C) 0,1 bis 20 Gew.-Teile eines Beschleunigers,
D) 0 bis 20 Gew.-Teile Wasser,
**dadurch gekennzeichnet, daß** der Beschleuniger in Komponente C ein Neutralsalz des Eisens oder Aluminiums mit einer Mineralsäure ist.

2. Bausatz nach Anspruch 1, **dadurch gekennzeichnet, daß** die Beschleuniger-Komponente C ein Alaun ist.

3. Bausatz nach Anspruch 1, **dadurch gekennzeichnet, daß** die Beschleuniger-Komponente C vorzugsweise ein Aluminiumalaun des Ammoniums und/oder der Alkalimetalle ist.

4. Bausatz nach Anspruch 1 bis 3, **dadurch gekennzeichnet, daß** die Beschleuniger-Komponente C in kristallwasserhaltiger Form enthalten ist.

5. Bausatz nach Anspruch 1 bis 4, **dadurch gekennzeichnet, daß** als Komponente D Kristallwasser hydratisierter Stoffe oder an Zeolithen oder Kieselgelen oder Füllstoffoberflächen adsorbiertes Wasser verwendet wird.

6. Bausatz nach Anspruch 1 bis 5, **dadurch gekennzeichnet, daß** zusätzlich Farbpigmente oder lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch Weichmacher auf Kohlenwasserstoffbasis), darüberhinaus aktive, verstärkende Füllstoffe wie beispielsweise hochdisperse oder gefällte Kieselsäuren, Graphit, Ruß, sowie passive Füllstoffe wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen in den Komponenten A-D enthalten sind.

7. Bausatz gemäß Anspruch 1 bis 6, **dadurch gekennzeichnet, daß** als Diorganopolysiloxankomponente A ein α,ω-Dihydroxydiorganopolysiloxan eingesetzt wird.

8. Verfahren zur Herstellung einer Dicht- oder Klebstoffmischung auf Basis von Diorganopolysiloxanen und Acetoxyvernetzern, **dadurch gekennzeichnet, daß** Komponenten A und B gemäß Anspruch 1 zu einer ersten Vormischung und die Komponenten C und D zu einer zweiten Vormischung vermischt werden, und die beiden Vormischungen kurz vor der Anwendung zu der wirksamen Dicht- und Klebstoffmischung vereinigt werden.

9. Verfahren nach Anspruch 8, **dadurch gekennzeichnet, daß** als Komponente C eine Verbindung gemäß einem oder mehrerer der Ansprüche 2 bis 4 und als Komponente D eine Mischung gemäß Anspruch 4 oder 5 verwendet wird.

10. Verfahren nach Anspruch 8 bis 9, **dadurch gekennzeichnet, daß** die Komponenten C und/oder D ggf. in Kombination mit Stoffen aus Anspruch 6 angepastet und ggf. ein Weichmacher auf Silikonbasis oder ein Diorganopolysiloxan-Polymeres gemäß Anspruch 1 zugesetzt wird.

11. Verfahren nach Anspruch 8 bis 10 **dadurch gekennzeichnet, daß** man ein α,ω-Dihydroxydiorganopolysiloxan verwendet.

12. Verwendung von Mischungen der Bausätze nach Anspruch 1 bis 7 als Dichtoder Klebstoff.

13. Verwendung von Mischungen der Bausätze nach Anspruch 1 bis 7 als Formmasse.

## Claims

1. Kit for the production of rapidly-hardening, acetoxysilane cross-linking silicone masses of at least bifunctionally-terminated diorganopolysiloxanes, acetoxysilane cross-linkers, as well as possibly filling materials, suitable additives and pigments, which contain the following components:
A) 100 wt. parts of an at least bifunctionally terminated diorganopolysiloxane, whereby this polysiloxane is built up from a linear or branched chain of repeating units of the formula 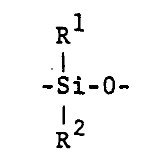 and contains at least two end groups Z
with
Z: -H, -OH, -OR¹ and SiR³(OCOR⁴)₂
R¹,R²: saturated or unsaturated hydrocarbon radicals with 1 to 15 carbon atoms, possibly substituted with halogen or cyano groups
R³: hydrogen or monovalent saturated or unsaturated hydrocarbon or hydrocarbonoxy radicals with 1 - 15 carbon atoms
R⁴: hydrogen and/or saturated or unsaturated aliphatic, cycloaliphatic or aromatic hydrocarbon radicals with 1 - 15 carbon atoms, possibly substituted with halogen or cyano groups,
B) 0.2 to 20 wt. parts of an acetoxysilane cross-linker of the general formula
R³ _{y}-Si-(OCOR⁴)_{4-y}
whereby y = 0 or 1 and R³, R⁴ have the above meaning,
C) 0.1 to 20 wt. parts of an accelerator,
D) 0 to 20 wt. parts of water,
**characterised in that** the accelerator in component C is a neutral salt of iron or aluminium with a mineral acid.

2. Kit according to claim 1, **characterised in that** the accelerator component C is an alum.

3. Kit according to claim 1, **characterised in that** the accelerator component C is preferably an aluminium alum of ammonium and/or of the alkali metals.

4. Kit according to claim 1 to 3, **characterised in that** the accelerator component C is contained in water of crystallisation-containing form.

5. Kit according to claim 1 to 4, **characterised in that**, as component D, is used water of crystallisationhydrated materials or water adsorbed on zeolites or silica gels or filling material surfaces.

6. Kit according to claim 1 to 5, **characterised in that** there are additionally contained coloured pigments or soluble dyestuffs, stabilisers against oxidation and action of heat, dispersers, reaction catalysts, fungicides, bonding agents, solvents, flame protection agents, plasticisers (preferably silicone oils but also plasticisers based on hydrocarbons), furthermore active, strengthening filling materials, such as for example highly dispersed or precipitated silicic acids, graphite, carbon black, as well as passive filling materials, such as e.g. calcium carbonate, silicates, quartz meal, glass and carbon fibres, diatomaceous earths, metal powders, metal oxides, synthetic material powders, as well as hollow spheres of glass or synthetic materials, in the components A - D.

7. Kit according to claim 1 to 6, **characterised in that**, as diorganopolysiloxane component A, there is used an α,ω-dihydroxydiorganopolysiloxane.

8. Process for the production of a sealing or adhesive material mixture based on diorganopolysiloxanes and acetoxy crpss-linkers, **characterised in that** components A and B according to claim 1 are mixed to give a first pre-mixture and the components C and D are mixed to give a second pre-mixture and the two pre-mixtures are combined shortly before use to give the effective sealing and adhesive mixture.

9. Process according to claim 8, **characterised in that**, as component C, there is used a compound according to one or more of claims 2 to 4 and, as component D, a mixture according to claim 4 or 5.

10. Process according to claim 8 to 9, **characterised in that** the components C and/or D, possibly in combination with materials from claim 6, are pasted and a plasticiser based on silicone or a diorganopolysiloxane polymer according to claim 1 is added.

11. Process according to claim 8 to 10, **characterised in that** one uses an α,ω-dihydroxydiorganopolysiloxane.

12. Use of mixtures of the kits according to claims 1 to 7 as sealing or adhesive.

13. Use of mixtures of the kits according to claims 1 to 7 as moulding mass.

## Revendications

1. Kit de préparation de masses de silicone à durcissement rapide, se réticulant à l'aide de groupes acétoxysilane, constituées de diorganopolysiloxanes à terminaison au moins bifonctionnelle, d'agents de réticulation acétoxysilane ainsi qu'éventuellement de charges, d'additifs et de pigments appropriés, lequel kit contient les composants suivants :
A) 100 parties en poids d'un diorganopolysiloxane à terminaison au moins bifonctionnelle, ce polysiloxane étant construit à partir d'une chaîne linéaire ou ramifiée constituée de motifs récurrents de formule 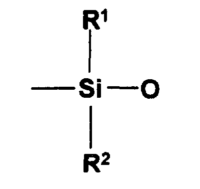 et contenant au moins deux groupes terminaux Z,
avec
Z: -H, -OH, -OR¹ et ― SiR³(OCOR⁴)₂
R¹, R² : des résidus d'hydrocarbure saturés ou insaturés ayant de 1 à 15 atomes de carbone, éventuellement substitués par des groupes halogéno ou cyano
R³: un atome d'hydrogène ou un résidu d'hydrocarbure ou d'hydrocarbure oxydé, monovalent, saturé ou insaturé avec de 1 à 15 atomes de carbone
R⁴ : un atome d'hydrogène et/ou un résidu d'hydrocarbure aliphatique, cycloaliphatique ou aromatique, saturé ou insaturé avec de 1 à 15 atomes de carbone, éventuellement substitué par des groupes halogéno ou cyano
B) 0,1 à 20 parties en poids d'un agent de réticulation à base d'acétoxysilane de formule générale
R³ _{y}Si-(OCOR⁴)_{4-y}
dans laquelle y= 0 ou 1 et R³, R⁴ prennent la signification ci-dessus,
C) 0,1 à 20% en poids d'un accélérateur,
D) 0 à 20 parties en poids d'eau
**caractérisé en ce que** l'accélérateur dans le composant C est un sel neutre du fer ou de l'aluminium avec un acide minéral.

2. Kit selon la revendication 1, **caractérisé en ce que** le composant accélérateur C est un alun.

3. Kit selon la revendication 1 **caractérisé en ce que** le composant accélérateur C est de préférence un alun aluminique de l'ammonium et/ou des métaux alcalins.

4. Kit selon les revendications 1 à 3, **caractérisé en ce que** le composant accélérateur C est contenu dans une forme contenant de l'eau de cristallisation.

5. Kit selon les revendications 1 à 4, **caractérisé en ce que** de l'eau de cristallisation de substance hydratée ou bien de l'eau adsorbée sur des zéolites ou des gels de silice ou des surfaces de charge est employée en tant que composant D.

6. Kit selon les revendications 1 à 5, **caractérisé en ce que**, de plus, des pigments colorants ou des colorants solubles, des stabilisants contre l'oxydation et l'effet de la chaleur, des dispersants, des catalyseurs de réaction, des fongicides, des agents adhésifs, des solvants, des ignifugeants, des plastifiants (de préférence des huiles siliconées, mais également des plastifiants à base d'hydrocarbures), des charges de renforcement, de surcroît actives, comme par exemple des acides siliciques très dispersés ou précipités, du graphite, de la suie, ainsi que des charges passives comme par exemple, le carbonate de calcium, les silicates, la farine de quartz, les fibres de verre et de carbone, la terre à diatomées, les poudres métalliques, les oxydes métalliques, les poudres de matière plastique ainsi que les perles creuses de verre ou de matières plastiques, sont contenues dans les composants A à D.

7. Kit selon les revendications 1 à 6, **caractérisé en ce qu'**un α,ω-dihydroxydiorganopolysiloxane est mis en oeuvre en tant que composant A à diorganopolysiloxane.

8. Procédé de préparation d'un mélange de produit d'étanchéité ou de colle à base de diorganopolysiloxane et d'agent de réticulation acétoxy, **caractérisé en ce que** les composants A et B selon la revendication 1, sont mélangés pour former un premier prémélange et les composants C et D sont mélangés pour former un deuxième prémélange, et que les deux prémélanges sont réunis peu avant l'application en obtenant le mélange efficace de produit d"étanchéité et de colle.

9. Procédé selon la revendication 8, **caractérisé en ce qu'**un composé selon l'une ou plusieurs des revendications 2 à 4 est employé en tant que composant C et un mélange selon la revendication 4 ou 5 est employé en tant que composant D.

10. Procédé selon les revendications 8 à 9, **caractérisé en ce que** les composants C et/ou D sont éventuellement mis en pâte, associés à des substances selon la revendication 6, et un plastifiant à base de silicone ou d'un polymère diorganopolysiloxane selon la revendication 1 y est éventuellement ajouté.

11. Procédé selon les revendications 8 à 10, **caractérisé en ce que** l'on emploie un α,ω-dihydroxydiorganopolysiloxane.

12. Utilisation de mélanges des kits selon les revendications 1 à 7 sous la forme de matière d'étanchéité ou de colle.

13. Utilisation de mélanges des kits selon les revendications 1 à 7 sous forme de masse moulable.
